# EUROPEAN PATENT APPLICATION

(11) **EP 3 651 061 A1**
(43) Date of publication of application: **13.05.2020**
(21) Application number: 19206214.9
(22) Date of filing: 30.10.2019
(51) Int. Cl.: G06K 9/00, B60W 50/14

(54) **METHOD AND DEVICE FOR EVALUATING THE RESULT OF AN AUTOMATIC PARKING OPERATION, CORRESPONDING DEVICE AND STORAGE MEDIUM**

(30) Priority: 30.10.2018 CN 201811279406
(71) Applicant: Baidu Online Network Technology (Beijing) Co., Ltd., Beijing 100085 (CN)
(72) Inventor: ZHANG, Qiuyu, Beijing, 100085, (CN)
(74) Representative: Zumstein, Angela

(57) **Abstract**

The present disclosure provides a method and an apparatus for determining an automatic parking effect, a device and a computer readable storage medium. The method for determining the automatic parking effect includes determining surrounding environment information of a vehicle in response to completion of automatic parking of the vehicle, in which the surrounding environment information at least indicates a set of surrounding objects of the vehicle and a position relationship between the vehicle and an object in the set of surrounding objects. The method also includes selecting at least one reference object from the set of surrounding objects based on the surrounding environment information. The method also includes determining a distance between the vehicle and the at least one reference object. The method also includes determining an accuracy of the automatic parking based on the distance.

## Description

### TECHNICAL FIELD

Embodiments of the present disclosure relate to a computer technology field, and more particularly, to a method and an apparatus for determining an automatic parking effect, a device and a computing device.

### BACKGROUND

with the development of artificial intelligence technology, automatic driving has become a focus of people's attention and research. Automatic parking is an important process of automatic driving. Automatic parking usually includes parking space identification and parking realization. Users' demand for automatic parking is fast and accurate parking. For these two requirements, the user has two main concerns at the end of the automatic parking: one is whether the vehicle is parked in place, and the other is the time spent by the automatic parking. However, conventional technology often does not take into account these concerns or determine the effects of the automatic parking.

### SUMMARY

According to example embodiments of the present disclosure, a scheme for determining an automatic parking effect is provided.

In a first aspect of the present disclosure, a method for determining an automatic parking effect is provided. The method includes determining surrounding environment information of a vehicle in response to completion of automatic parking of the vehicle, in which the surrounding environment information at least indicates a set of surrounding objects of the vehicle and a position relationship between the vehicle and an object in the set of surrounding objects. The method also includes selecting at least one reference object from the set of surrounding objects based on the surrounding environment information. The method also includes determining a distance between the vehicle and the at least one reference object. The method also includes determining an accuracy of the automatic parking based on the distance.

In a second aspect of the present disclosure, an apparatus for determining an automatic parking effect is provided. The apparatus includes an environment information determining module. The environment information determining module is configured to determine surrounding environment information of a vehicle in response to completion of automatic parking of the vehicle. The surrounding environment information at least indicates a set of surrounding objects of the vehicle and a position relationship between the vehicle and an object in the set of surrounding objects of the vehicle. The apparatus also includes a reference object selecting module. The reference object selecting module is configured to select at least one reference object from the set of surrounding objects based on the surrounding environment information. The apparatus also includes a distance determining module. The distance determining module is configured to determine a distance between the vehicle and at least one reference object. The apparatus also includes an accuracy determining module. The accuracy determining module is configured to determine an accuracy of the automatic parking based on the distance.

In a third aspect of the present disclosure, a device is provided. The device includes one or more processors and a storage device configured to store one or more programs. When the one or more programs are executed by the one or more processors, the one or more processors are caused to implement the method according to the first aspect of the present disclosure.

In a fourth aspect of the present disclosure, a computer readable storage medium is provided. The computer readable storage medium is stored thereon with a computer program. When the program is executed by a processor, the method according to the first aspect of the present disclosure is implemented.

It shall be understood that the content described in the section of summary is not intended to limit key or important features of the embodiments of the present disclosure or to limit the scope of the present disclosure. Other features of the present disclosure will be easily understood by the following description.

### BRIEF DESCRIPTION OF THE DRAWINGS

In combination with the attached drawings and referring to the following detailed description, the above and other features, advantages and aspects of each embodiment of the present disclosure will become more obvious. In the drawings, the same or similar reference numeral represents the same or similar element, in which:
FIG. 1 illustrates an example environment in which embodiments of the present disclosure may be implemented.
FIG. 2 illustrates a flowchart of a method for determining an automatic parking effect according to embodiments of the present disclosure.
FIG. 3 illustrates a flowchart of a process for determining a distance according to some embodiments of the present disclosure.
FIG. 4 illustrates a flowchart of a process for determining a distance according to some embodiments of the present disclosure.
FIG. 5A illustrates a schematic diagram of an example of providing information related to automatic parking according to some embodiments of the present disclosure.
FIG. 5B illustrates a schematic diagram of another example of providing information related to automatic parking according to some embodiments of the present disclosure.
FIG. 5C illustrates a schematic diagram of yet another example of providing information related to automatic parking according to some embodiments of the present disclosure.
FIG. 6 illustrates a schematic diagram of providing a duration of automatic parking according to some embodiments of the present disclosure.
FIG. 7 illustrates a schematic block diagram of an apparatus for determining an automatic parking effect according to embodiments of the present disclosure.
FIG. 8 illustrates a block diagram of a computing device that can implement embodiments of the present disclosure.

### DETAILED DESCRIPTION

Embodiments of the present disclosure are described in more detail below with reference to the attached drawings. Although some embodiments of the present disclosure are illustrated in the attached drawings, it should be understood that the present disclosure may be implemented in various forms and should not be interpreted as limited to the embodiments elaborated herein. Rather, providing these embodiments is for a more thorough and complete understanding of the present disclosure. It should be understood that the accompanying drawings and embodiments of the present disclosure are intended for exemplary use only and are not intended to limit the protection scope of the present disclosure

In the description of embodiments of the present disclosure, the term "including" and similar terms shall be understood as open inclusion, i.e. "including but not limited to". The term "based on" should be understood to mean "at least partially based on". The term "an embodiment" or "such embodiment" shall be understood as "at least one embodiment". The terms "first", "second", and so on can refer to different or identical objects. Other explicit and implicit definitions may be included below.

As mentioned above, at the end of automatic parking, the user pays attention to whether the vehicle stops in place, that is, whether the vehicle has deviation from the stop line or is on the stop line, whether the distance from the curb, stop line, or parking bar is appropriate, etc. The user is also concerned about the efficiency of the automatic parking, that is, the time taken to park the vehicle. Therefore, at the end of the automatic parking, the effect of the automatic parking should be determined, that is, the parking effect of the vehicle should be summarized and presented to the user.

However, in the current application, only the parking space identification is presented to the user in the early stage of parking and the parking track is presented in the parking process. The parking effect is not determined, summarized and presented when the automatic parking is completed. This requires the user to manually observe the parking situation of the vehicle and determine whether manual adjustment is needed based on experience. This approach actually reduces the efficiency and use experience of the automatic parking.

In order to address at least part of one or more of the above and other potential problems, exemplary embodiments of the present disclosure propose a scheme for determining an automatic parking effect. In this scheme, after the automatic parking of the vehicle is completed, the distance between the parked vehicle and the reference object can be determined by using the surrounding environment information, and the accuracy of the automatic parking can be determined based on the determined distance. Therefore, the scheme of the present disclosure can advantageously realize automatic determining of the automatic parking effect. With the scheme of the present disclosure, automatic parking can realize the complete process of determining the parking space in the early stage, determining the track in the middle stage and determining the effect in the later stage. In this way, users can reduce the time and energy consumption of visually determining the effect of automatic parking, thereby improving the use experience of automatic driving.

In the following, embodiments of the present disclosure will be described in detail with reference to drawings.

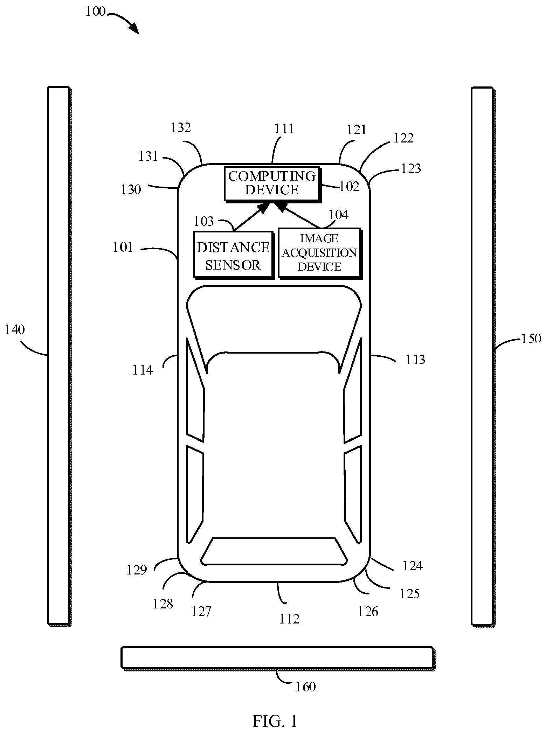

Fig. 1 illustrates an example environment in which embodiments of the present disclosure may be implemented. In the example environment, the computing device 102 is configured to determine the automatic parking effect of the vehicle 101. It should be understood, the environment 100 illustrated in Fig. 1 is merely exemplary, and more computing devices may be used to determine the automatic parking effect of the vehicle 101. It should also be understood, the computing device 102 may be a stationary computing device or a portable computing device such as a mobile phone or tablet computer.

The vehicle 101 is equipped with a distance sensor 103 and an image acquisition device 104. The distance sensor 103 may be an ultrasonic sensor. The ultrasonic sensors may emit an ultrasonic signal, and then receive the signal reflected from the obstacle and estimate the distance from the obstacle based on the time from transmitting the signal to receiving the signal. The distance sensor 103 may also be a laser sensor, a radar, or any other sensor that can measure distance. The image acquisition device 104 may be a camera, such as a wide-angle camera or an ultra wide-angle camera. The image acquisition device 104 may also be any image acquisition device that can detect the surroundings of the vehicle 101.

The distance sensor 103 and the image acquisition device 104 may send their acquired data about the surrounding environment to the computing device 102, thus providing environmental recognition capability. Using the distance sensor 103 and the image acquisition device 104, objects in the surrounding environment may be identified accurately, including static obstacles (stationary vehicles, pillars, walls, etc.), mobile obstacles (mobile vehicles, pedestrians, electric tricycles, bicycles, etc.), the types of parking spaces, the sizes of parking spaces, marking lines (for example, stop lines), curbs, stop bars, road conditions, etc. With the distance sensor 103 and the image acquisition device 104, the position (distance) relationship with the surrounding environment elements can be determined accurately.

The distance sensor 103 and the image acquisition device 104 may be placed in a predetermined part of the vehicle 101. In general, the image acquisition device 104 may be placed at each of the predetermined locations 111-114. The predetermined locations 111 and 112 are located on the front and rear of the vehicle 101, respectively. The predetermined locations 113 and 114 may be located on the left and right sides of the vehicle 101, such as the left and right rearview mirrors of the vehicle 101, respectively. The distance sensor 103 may be placed at each of the predetermined locations 121-132.

In some embodiments, these predetermined locations may be divided into sets based on relationships between them and the vehicle 101. For example, the predetermined locations 122-125 and 113 may belong to a set of predetermined locations associated with the right side of the vehicle 101; the predetermined locations 128-131 and 114 may belong to a set of predetermined locations associated with the left side of vehicle 101; the predetermined locations 125-128 and 112 may belong to a set of predetermined locations associated with the rear side of the vehicle 101. It should be understood that some of the predetermined locations 121-132 and 111-114 may be associated with both sides of the vehicle 101. For example, the predetermined location 125 may belong to both the set of predetermined locations associated with the right side of the vehicle and the set of predetermined locations associated with the rear side of the vehicle.

It should be understood that the number and specific position of the predetermined locations on the vehicle 101 as well as the arrangement of the distance sensor 103 and the image acquisition device 104 on the vehicle 101 shown in Fig. 1 are only exemplary and are not intended to limit the scope of the present disclosure. In embodiments of the present disclosure, the number and specific position of the predetermined locations, as well as the arrangement of the distance sensor and the image acquisition device, may be determined according to the specific appearance characteristics of the vehicle 101. Furthermore, in embodiments of the present disclosure, the distance sensor and the image acquisition device arranged on the vehicle 101 for automatic parking or driving may be reused without rearrangement.

The distance sensor 103 and the image acquisition device 104 may be used to identify the surrounding environment information of the vehicle 101. The surrounding environment information indicates at least the set of surrounding objects of the vehicle 101 and the position relationship between the vehicle 101 and the objects in the set of surrounding objects. Such surrounding objects may include objects that define the parking area of the vehicle 101, such as stop lines, curbs, walls, pillars, etc. The surrounding objects may also include other vehicles, pedestrians, and so on.

Objects 140, 150 and 160 are shown in Fig. 1. As an example, the objects 140 and 150 may be marking lines such as stop lines, and the object 160 may be a parking bar. As another example, the objects 140 and 150 may be other vehicles, and the object 160 may be an obstacle such as a wall. It should be understood that the number of surrounding objects and position relative to the vehicle 101 shown in Fig. 1 are merely exemplary and not intended to limit the scope of the present disclosure, and that embodiments of the present disclosure may include more or less surrounding objects.

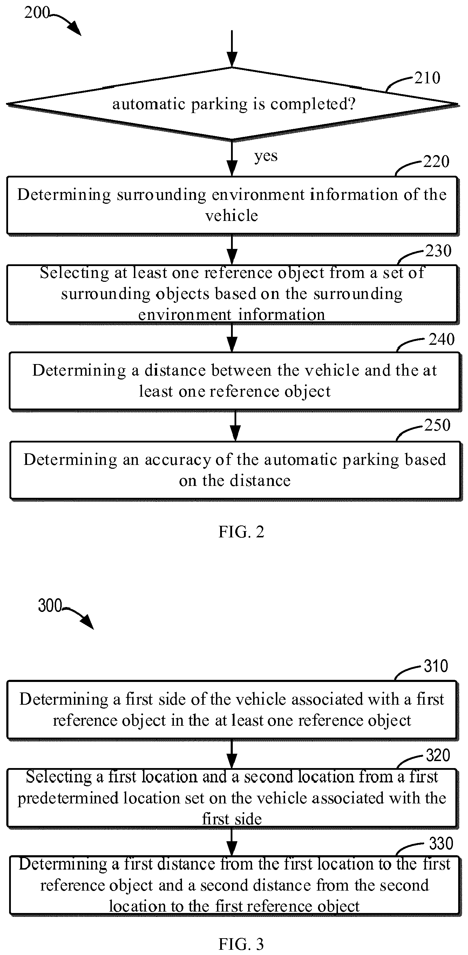

In order to better understand the scheme for determining the automatic parking effect provided by embodiments of the present disclosure, embodiments of the present disclosure will be further described by referring to Fig. 2. Fig. 2 illustrates a flowchart of a process 200 for determining the effect of automatic parking according to the embodiments of the present disclosure. The process 200 may be implemented by the computing device 102 in Fig. 1. For the sake of discussion, the process 200 is described in combination with Fig. 1.

At block 210, the computing device 102 determines whether the vehicle 101 has completed automatic parking. For example, the computing device 102 may determine whether the automatic parking of the vehicle 101 is completed by determining whether the vehicle 101 moves within a predetermined time interval, or by communicating with the module or device that controls the execution of automatic parking. If the computing device 101 determines that automatic parking of the vehicle 101 has been completed, the process 200 proceeds to block 220.

At block 220, the computing device 102 determines surrounding environment information of the vehicle 101. The surrounding environment information indicates at least the set of surrounding objects of the vehicle 101 and the position relationship between the vehicle 101 and the objects in the set of surrounding objects of the vehicle 101. The computing device 102 may use data received from the distance sensor 103 and the image acquisition device 104 to determine the surrounding environment information. For example, sensing data from the the distance sensor 103 may be used to detect the surrounding objects that have prominent features (meaning that they highlight the plane in which the vehicle 101 is parked), for example, curbs, walls, pillars, other vehicles, etc. Images taken by the image acquisition device 104 may be used to identify surrounding objects with non-prominent features, such as marking lines and stop lines.

In the example of Fig. 1, the surrounding environment information may indicate that the object 140 is adjacent to the left side of the vehicle 101, the object 150 is adjacent to the right side of the vehicle 101, and the object 160 is adjacent to the rear side of the vehicle 101.

At block 203, the computing device 102 selects at least one reference object from the set of surrounding objects based on the surrounding environment information. The selected at least one reference object may be the surrounding objects that restrict the area where the vehicle 101 can be parked. In the example of Fig. 1, the at least one reference object selected may include the objects 140, 150, and 160.

In some embodiments, the at least one reference object selected may include only one reference object. For example, when the vehicle 101 is parked at the side of the road, the surrounding environment information may indicate that the curb adjacent to the right side of the vehicle 101 restricts the area where the vehicle 101 can be parked. In this case, the computing device 102 may select the curb adjacent to the right side of the vehicle 101 as the reference object. For another example, when the vehicle 101 is parked in front of a wall and there are no other obstacles around, the surrounding environment information may indicate that only the wall at the back of the vehicle 101 limits the area where the vehicle 101 can be parked. In this case, the computing device 102 can select the wall adjacent to the rear side of the vehicle 101 as the reference object.

In some embodiments, the at least one reference object selected may include multiple reference objects. For example, in the example of Fig.1, the objects 140, 150, and 160 exist on the left, right, and rear sides of the vehicle 101, limiting the area where the vehicle 101 can be parked. In this case, the computing device 102 may select the objects 140, 150, and 160 as the reference objects.

At block 240, the computing device determines a distance from the vehicle 101 to the at least one reference object. In some embodiments, the computing device 102 may determine only the distance between a predetermined location of the vehicle 101 and the at least one reference object. For example, the computing device 102 may determine the distance from the object 150 to the predetermined location 113 on the vehicle 101.

In some embodiments, the computing device 102 may determine distances from two predetermined locations on the vehicle 101 to one of the at least one reference object (for example, the object 150), to obtain two distances. In the followings, such an embodiment is illustrated with reference to Fig. 3.

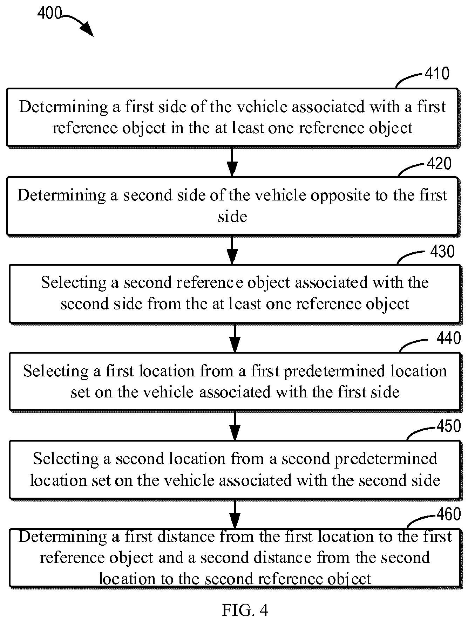

In some embodiments, the computing device 102 may determine distances between two predetermined locations on the vehicle 101 and two of the at least one reference object (for example, objects 140 and 150), thus obtaining two distances. Such an embodiment is described in detail below with reference to Fig. 4.

The computing device 102 may determine the distance by using the distance sensor 103 and the image acquisition device 104 placed on the vehicle 101. When the computing device 102 determines the first reference object in the at least one reference object as an obstacle, the computing device 102 may measure the distance between the vehicle 101 and the first reference object using the distance sensor placed on the vehicle 101. For example, when the computing device 102 identifies the object 150 as a reference object and the object 150 as an obstacle such as a wall, curb, or other vehicle, the computing device 102 may use the distance sensor 103 to sense the distance from the vehicle 101 (for example, the predetermined location 123 or 124) to the object 150.

When the computing device 102 determines the first reference object in the at least one reference object as the marking line, an image including at least a part of the vehicle 101 and at least a part of the first reference object may be obtained by using the image acquisition device 104 arranged on the vehicle 101. Then, the computing device 102 may determine the distance between the vehicle 101 and the first reference object from the obtained image. For example, when the computing device 102 determines that the object 140 is the reference object and that the object 140 is a marking line such as a stop line, the computing device 102 may use the image acquired by the image acquisition device 104 to determine the distance between the vehicle 101 (for example, predetermined location 130 or 129) and the object 140.

At block 250, the computing device determines an accuracy of the automatic parking based on the distance determined at block 240. The accuracy of the automatic parking may be determined based on a predefined rule.

In embodiments where only one distance between the vehicle 101 and the reference object is determined, the computing device 102 may determine the accuracy based on a relationship of the distance and a distance threshold. When the distance determined is greater than the distance threshold, it may be considered that the vehicle 101 deviates far from the reference object, and thus the accuracy of automatic parking is not high. Thus, such an implementation may determine the degree of deviation of the vehicle from the reference object (for example, the marking line defining the parking area, the curb, etc.) and thus evaluate the effect of automatic parking.

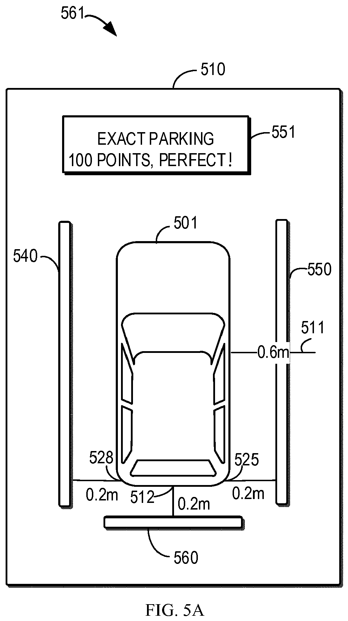

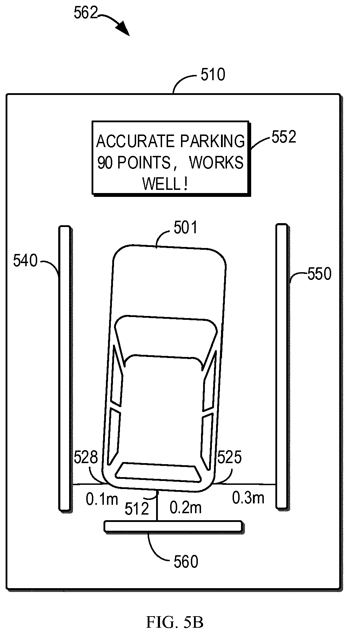

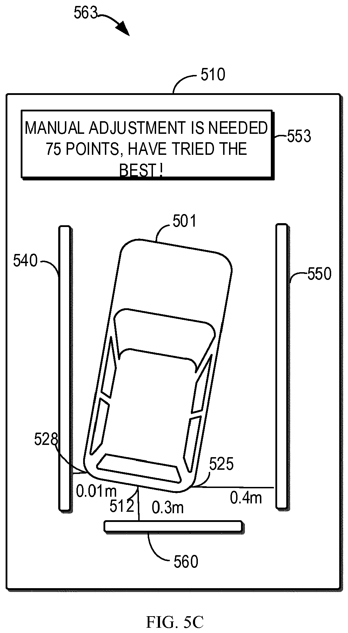

In the above embodiments where at least two distances (referred to as first distance and second distance below for the purposes of discussion) are determined, the computing device 102 may determine the relative relationship between the first distance and the second distance and, based on the relative relationship, determine the accuracy of the automatic parking. This implementation allows for a more detailed assessment of the effects of automatic parking, such as whether the vehicle is skewed relative to the reference object. Such an embodiment is described in detail below with reference to Fig. 5.

The process 200 of determining the effect of automatic parking according to embodiments of the present disclosure is described above. With the technical solution of the present disclosure, the automatic determining of the automatic parking effect can be realized. In this way, the end stage of automatic parking may be improved and the convenience of automatic parking may be further improved, thus contributing to the user experience.

As mentioned above, in some embodiments, the computing device 102 may determine the distances between two predetermined locations on vehicle 101 and one of at least one reference object (for example, the object 150). Fig. 3 illustrates a flowchart of a process 300 of determining a distance according to some embodiments of the present disclosure. The process 300 may be implemented by the computing device 102 in Fig. 1. The process 300 may be considered as a concrete implementation of block 240.

At block 310, the computing device 102 determines a first side of the vehicle 101 associated with the first reference object in the at least one reference object. For example, the computing device 102 may determine the first side associated with the object 150, i.e., the right side of the vehicle 101 of Fig. 1.

At block 320, the computing device selects a first location and a second location from a first predetermined location set associated with the first side, in which the first location is different from the second location. For example, the computing device 102 may select the location 122 from the first predetermined location set associated with the right side of the vehicle 101 as the first location, and select the location 125 as the second location. The first predetermined location set may include the predetermined locations 122-125 and 113.

At block 330, the computing device 102 determines a first distance from the first location to the first reference object and a second distance from the second location to the first reference object. For example, the computing device 102 may determine the distance between the location 122 and the object 150 as the first distance, and determine the distance between the location 125 and the object 150 as the second distance. Determining the first distance and the second distance may be implemented based on the type of the object 150 as described above with reference to Fig. 2. For example, when the reference object 150 is an obstacle such as a curb, distance sensors placed at locations 122 and 125 may be used to sense the distance. When the reference object 150 is the marking line, the distance may be determined by using the image acquired by the image acquisition device 104. The image acquisition device 104 may be placed at the location 113 and may be rotated as needed to take images including the determined locations and reference object.

In such embodiments, by determining multiple distances between different locations of the vehicle and the reference object, the effect of automatic parking can be determined in greater detail. Especially, if the vehicle is parked correctly may be determined based on the relative relationship between multiple distances. Such embodiments are particularly suitable for the case of automatic parallel parking at the roadside and may be used to determine whether a vehicle that has completed automatic parking is skewed with respect to the curb.

As mentioned above, in some embodiments, the computing device 102 may determine distances between two predetermined locations on the vehicle 101 and two reference objects in the at least one reference object (for example, the objects 140 and 150). Fig. 4 illustrates a flowchart of a process 400 of determining a distance according to some embodiments of the present disclosure. The process 400 may be implemented by the computing device 102 in Fig. 1. The process 400 may be considered as another concrete implementation of block 240.

At block 410, the computing device 102 determines a first side of the vehicle 101 associated with the first reference object in the at least one reference object. For example, the computing device 102 may determine the first side associated with the object 150, i.e., the right side of the vehicle 101 of Fig. 1.

At block 420, the computing device 102 determines a second side of the vehicle 101 opposite to the first side. For example, the computing device 102 may determine the left side of the vehicle 101 as the second side.

At block 430, the computing device 102 selects a second reference object associated with the second side from the at least one reference object. For example, the computing device 102 may select the object 140 adjacent to the left side from the objects 140, 150 and 160 as the second reference object.

At block 440, the computing device 102 selects a first location from a first predetermined location set on the vehicle 101 associated with the first side. For example, the computing device 102 may select the location 125 from the first predetermined location set associated with the right side of the vehicle 101 as the first location. The first predetermined location set may include the predetermined locations 122-125 and 113.

At block 450, the computing device 102 selects a second location from a second predetermined location set on the vehicle 101 associated with the second side. For example, the computing device 102 may select the location 128 from the second predetermined location set associated with the left side of the vehicle 101 as the second location. The second predetermined location set may include the predetermined locations 127-132 and 114.

At block 460, the computing device 102 determines a first distance from the first location to the first reference object and a second distance from the second location to the second reference object. For example, the computing device 102 may determine the distance between the location 125 and the object 150 as the first distance, and determine the distance between the location 128 and the object 140 as the second distance. Determining the first distance and the second distance may be implemented based on the type of the object 140 or 150 as described above with reference to Fig. 2.

In such embodiments, by determining multiple distances of different locations on the vehicle with respect to different reference objects, the effect of automatic parking can be determined in greater detail. Such embodiments are particularly suitable for the case of automatic parking in regular parking spaces or other case of automatic parking in the area defined by nearly parallel objects (for example, two other vehicles).

In the embodiments described with reference to Fig. 3 or Fig. 4, two distances are determined by the computing device 102. In such embodiments, at block 250, the computing device 102 may determine the accuracy of the automatic parking based on the relative relationship between the two distances. For example, the computing device 102 may calculate the ratio of the first distance to the second distance (for example, the smaller of them as a numerator). The computing device 102 may then determine the accuracy based on the size of the ratio relative to at least one ratio threshold. For example, when the calculated ratio is greater than a first ratio threshold, the computing device 102 may determine that the automatic parking has high accuracy. When the calculated ratio is below the first ratio threshold and larger than the second ratio threshold, the computing device 102 may determine that the automatic parking has a moderate accuracy. When the calculated ratio is below the second ratio threshold, the computing device 102 may determine that the automatic parking has low accuracy.

In such embodiments, the accuracy of the automatic parking is not determined depending on the absolute values of the distances determined. Due to the different parking areas (for example, parking spaces) and the different vehicle sizes, such embodiments not only enable more detailed determination of the effects of automatic parking, but also have wider applicability.

In some embodiments, it is also possible to further determine the distances between the vehicle 101 and other reference objects as reference for accuracy determination, or to provide the user with richer information about the automatic parking. In Fig. 1, for example, the computing device 102 may also determine the distance between the location 112 of the vehicle 101 and the object 160.

In some embodiments, the computing device 102 may provide (for example, to the person in vehicle 101) information related to the accuracy of automatic parking. Such information may be included in at least one of the accuracy determined at block 250, the distance determined at block 240 and the duration of the automatic parking. The duration of the automatic parking refers to the time period from identification of the parking area to completion of the automatic parking.

The computing device 102 may provide the information related to the automatic parking in various forms, such as graphics or sound. Additionally, the computing device 102 may provide such information using at least one of colors, shapes, patterns, and sounds that correspond to accuracy. Different levels of accuracy may correspond to different colors, shapes, patterns and sounds. For example, the high accuracy may correspond to green, the moderate accuracy may correspond to blue, and the low accuracy may correspond to red.

In some embodiments, the computing device 102 may visualize the accuracy of the automatic parking and the relative position of the parked vehicle against surrounding objects. Specifically, the computing device 102 may determine the graphical representation of the vehicle 101 and present information related to the automatic parking in association with the graphical representation. Figs. 5A-5C depict such embodiments.

Fig. 5A illustrates a schematic diagram 561 of an example of providing information related to automatic parking according to some embodiments of the present disclosure; FIG. 5B illustrates a schematic diagram 562 of another example of providing information related to automatic parking according to some embodiments of the present disclosure; and FIG. 5C illustrates a schematic diagram 563 of yet another example of providing information related to automatic parking according to some embodiments of the present disclosure.

In Figs. 5A-5C, the graphical representation 501 of the vehicle 101, the representation 540 of the object 140, the representation 550 of the object 150, the representation 560 of the object 160, the representation 512 of the location 112, the representation 525 of the location 125 and the representation 528 of the location 128 are displayed on the display device 510 of the vehicle 101. The representations 540, 550 and 560 may be models of the objects 140, 150 and 160, or images of the objects 140, 150 and 160 reconstructed from images taken by the image acquisition device 104.

In the example of Fig. 5A, the automatic parking of the vehicle 101 has high accuracy. As shown in the figure, the distance between the location 125 and the object 150 (which may be considered as the first distance mentioned above) is 0.2m, and the distance between the location 128 and the object 140 (which may be considered as the second distance mentioned above) is 0.2m. A color corresponding to high accuracy (for example, green) may be used to display the distance in Fig. 5A and the parking effect summary in box 551.

FIG. 5A also shows that the distance between the location 112 and the object 160 is 0.2m. In addition, the distance representation 511 may represent the distance between the vehicle 101 and another vehicle on the right.

In the example of Fig. 5B, the automatic parking of the vehicle 101 has moderate accuracy. As shown in the figure, the distance between the location 125 and the object 150 (which may be considered as the first distance mentioned above) is 0.3m, and the distance between the location 128 and the object 140 (which may be considered as the second distance mentioned above) is 0.1m. A color corresponding to moderate accuracy (for example, blue) may be used to display the distance in Fig. 5B and the parking effect summary in box 552. FIG. 5B also shows that the distance between the location 112 and the object 160 is 0.2m.

In the example of Fig. 5C, the automatic parking of the vehicle 101 has low accuracy. As shown in the figure, the distance between the location 125 and the object 150 (which may be considered as the first distance mentioned above) is 0.4m, and the distance between the location 128 and the object 140 (which may be considered as the second distance mentioned above) is 0.01m. A color corresponding to low accuracy (for example, red) may be used to display the distance in Fig. 5C and the parking effect summary in the box 553. FIG. 5C also shows that the distance between the location 112 and the object 160 is 0.3m.

In such embodiments, the person in the vehicle may more intuitively determine the parking situation of the vehicle to determine whether manual adjustments are needed, without relying on experience or getting out of the vehicle to check the parking situation of the vehicle. In this way, the convenience of automatic parking can be further improved.

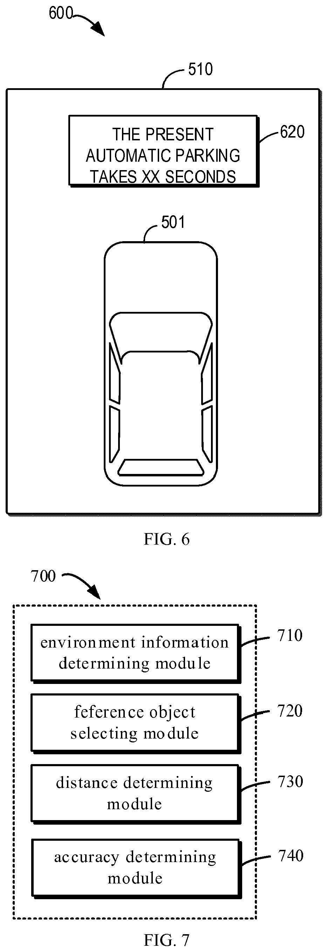

As mentioned above, the computing device 102 may further provide the duration of the automatic parking. FIG. 6 illustrates a schematic diagram 600 of providing a duration of automatic parking according to some embodiments of the present disclosure. In Fig. 6, the graphical representation 501 of the vehicle 101 is displayed on the display screen 510 of the vehicle 101 and text related to the duration of automatic parking is shown in the box 620. The color of the text in box 620 may be determined based on the length of the duration. For example, for very fast automatic parking, the text in box 620 may be rendered in green; for relatively faster automatic parking, the text in box 620 may be rendered in blue; for slower automatic parking, the text in box 620 may be rendered in red. Additionally, other statements associated with the length of the duration may be represented.

In such embodiments, the person in the vehicle may have a specific and intuitive understanding of the completion efficiency of the automatic parking. It should be understood that the contents shown in Fig. 6 may be represented in combination with Figs. 5A-5C.

Fig. 7 illustrates a schematic block diagram 600 of an apparatus for determining an automatic parking effect according to embodiments of the present disclosure. The apparatus 700 may be included in the computing device 102 of Fig. 1 or may be implemented as the computing device 102. As illustrated in Fig. 7, the apparatus 700 includes an environment information determining module 710. The environment information determining module 710 is configured to determine surrounding environment information of a vehicle in response to completion of automatic parking of the vehicle. The surrounding environment information at least indicates the set of surrounding objects of the vehicle and a position relationship between the vehicle and an object in the set of surrounding objects of the vehicle. The apparatus 700 also includes a reference object selecting module 720. The reference object selecting module 720 is configured to select at least one reference object from the set of surrounding objects based on the surrounding environment information. The apparatus 700 also includes a distance determining module 730. The distance determining module 730 is configured to determine a distance between the vehicle and at least one reference object. The apparatus 700 also includes an accuracy determining module 740. The accuracy determining module 740 is configured to determine an accuracy of the automatic parking based on the distance.

In some embodiments, the distance determining module 730 includes: a first side determining unit, configured to determine a first side of the vehicle associated with a first reference object in the at least one reference object; a location selecting unit, configured to select a first location and a second location from a first predetermined location set on the vehicle associated with the first side, the first location being different from the second location; and a distance determining unit, configured to determine a first distance from the first location to the first reference object and a second distance from the second location to the first reference object.

In some embodiments, the distance determining module 730 includes: a first side determining unit, configured to determine a first side of the vehicle associated with a first reference object in the at least one reference object; a second side determining unit, configured to determine a second side of the vehicle opposite to the first side; a second reference object selecting unit, configured to select a second reference object associated with the second side from the at least one reference object; a first location determining unit, configured to select a first location from a first predetermined location set on the vehicle associated with the first side; a second location determining unit, configured to select a second location from a second predetermined location set on the vehicle associated with the second side; and a distance determining unit, configured to determine a first distance from the first location to the first reference object and a second distance from the second location to the second reference object.

In some embodiments, the accuracy determining module 740 includes: a relative relationship determining unit, configured to determine a relative relationship between the first distance and the second distance; and an accuracy determining unit, configured to determine the accuracy based on the relative relationship.

In some embodiments, the distance determining module 730 includes: a first determining unit, in response to determining that a first reference object in the at least one reference object is an obstacle, measure the distance between the vehicle and the first reference object by using a distance sensor arranged on the vehicle; and a second determining unit, configured to, in response to determining that the first reference object is a marking line, acquire an image comprising at least a part of the vehicle and at least a part of the first reference object by using an image acquisition device arranged on the vehicle, and determine the distance between the vehicle and the first reference object from the image.

In some embodiments, the apparatus 700 also includes an information providing module. The information providing module is configured to provide information related to the accuracy of the automatic parking, in which the information comprises at least one of the accuracy, the distance and a duration of the automatic parking.

In some embodiments, the first information providing module includes an information providing unit. The information providing unit is configured to provide the information by using at least one of color, shape, pattern and sound corresponding to the accuracy.

In some embodiments, the information providing module includes: a representation determining unit, configured to determine a graphical representation of the vehicle; and an information representing unit, configured to represent the information in association with the graphical representation.

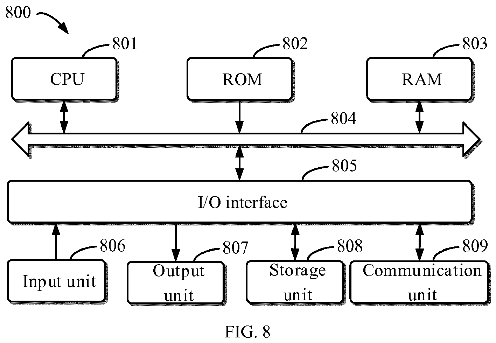

FIG. 8 illustrates a block diagram of an exemplary device 102 suitable for implementing embodiments of the present disclosure. The device 800 may be used to implement the computing device 102 in Fig. 1. As illustrated in Fig. 8, the device 800 includes a central processing unit (CPU) 801 that can perform various appropriate actions and processes based on computer program instructions stored in the read only memory (ROM) 802 or computer program instructions loaded from the memory unit 808 into the random access memory (RAM) 803. In RAM 803, various programs and data needed for the operation of the device 800 may also be stored. The CPU 801, ROM 802, and RAM 803 are connected to each other via the bus 804. The input/output (I/O) interface 805 is also connected to the bus 804.

Multiple components of the device 800 are connected to the I/O interface 805, including: the input unit 806, such as keyboard, mouse, etc.; the output unit 807, such as various types of monitors, speakers, etc.; storage unit 808, such as disk, CD, etc; and the communication unit 809, such as network cards, modems, wireless transceiver, etc. The communication unit 809 allows the device 800 to exchange information/data with other devices via the computer network such as Internet and/or various telecommunication networks.

The processing unit 801 performs the various methods and processes described above, such as any of the processes 200, 300, and 400. For example, in some embodiments, any of the processes 200, 300, and 400 may be implemented as a computer software program that is physically contained in machine-readable media, such as storage unit 808. In some embodiments, part or all of a computer program may be loaded and/or installed onto the device 800 via the ROM 802 and/or the communication unit 809. When the computer program is loaded into the RAM 803 and executed by the CPU 801, one or more steps of any of the processes 200, 300, and 400 described above can be executed. Alternatively, in other embodiments, the CPU 801 may be configured to execute any of the processes 200, 300, and 400 by any other appropriate means (for example, with the help of firmware).

The functions described above herein may be performed at least partially by one or more hardware logic components. For example, demonstration types of hardware logic components that can be used non-restrictively include field programmable gate arrays (FPGA), application specific integrated circuits (ASIC), application specific standard products (ASSP), systems on a chip (SOC), complex programmable logic devices (CPLD), and so on.

Program codes used to implement the method of the present disclosure may be written in any combination of one or more programming languages. The program codes may be provided to a processor or a controller of a general computer, a dedicated computer or other programmable data processing device, such that the program codes, when executed by the processor or the controller, cause the functions/operations defined in the flowchart and/or block diagram to be implemented. The program codes may be executed completely on a machine, partly on the machine, executed partly on the machine as a separate package and partly on a remote machine, or completely executed on a remote machine or a server.

In the context of the present disclosure, machine readable media may be tangible media that may contain or store programs for use by or in conjunction with an instruction execution system, apparatus, or device. The machine readable media may be machine readable signal media or machine readable storage media. The machine readable media may include, but not limited to, electronic, magnetic, optical, electromagnetic, infrared, or semiconductor systems, apparatuses or devices, or any suitable combination of the above. More concrete examples of the machine readable storage medium would include the electrical connection based on one or more lines, portable computer disk, hard disk, random access memory (RAM), read-only memory (ROM), erasable programmable read-only memory (EPROM) or flash memory, optical fiber, convenient type compact disc read-only memory (CD-ROM), optical storage devices, magnetic storage device, or any suitable combination of the above content.

Furthermore, although the operations are depicted in a particular order, this should be understood that the operations are required to be performed in a particular or sequential order as indicated, or that all the operations illustrated should be performed to achieve the desired result. Under certain circumstances, multitasking and parallel processing may be beneficial. Similarly, although some implementation details are included in the above discussion, these should not be interpreted as limiting the scope of the present disclosure. Certain characteristics described in the context of individual embodiments may also be combined and implemented in a single implementation. Conversely, the various characteristics described in the context of a single implementation may also be implemented individually or in any appropriate sub-combination in multiple implementations.

Although the subject has been described in language specific to the structural features and/or logical actions of the method, it should be understood that the subject defined in the attached claim is not necessarily limited to the specific features or actions described above. Instead, the specific features and actions described above are merely an example form of implementing the claims.

## Claims

1. A method for determining an automatic parking effect, comprising:
determining surrounding environment information of a vehicle in response to completion of automatic parking of the vehicle, in which the surrounding environment information at least indicates a set of surrounding objects of the vehicle and a position relationship between the vehicle and an object in the set of surrounding objects;
selecting at least one reference object from the set of surrounding objects based on the surrounding environment information;
determining a distance between the vehicle and the at least one reference object; and
determining an accuracy of the automatic parking based on the distance.

2. The method of claim 1, wherein determining the distance between the vehicle and the at least one reference object comprises:
determining a first side of the vehicle associated with a first reference object in the at least one reference object;
selecting a first location and a second location from a first predetermined location set on the vehicle associated with the first side, the first location being different from the second location; and
determining a first distance from the first location to the first reference object and a second distance from the second location to the first reference object.

3. The method of claim 1, wherein determining the distance between the vehicle and the at least one reference object comprises:
determining a first side of the vehicle associated with a first reference object in the at least one reference object;
determining a second side of the vehicle opposite to the first side;
selecting a second reference object associated with the second side from the at least one reference object;
selecting a first location from a first predetermined location set on the vehicle associated with the first side;
selecting a second location from a second predetermined location set on the vehicle associated with the second side; and
determining a first distance from the first location to the first reference object and a second distance from the second location to the second reference object.

4. The method of claim 2 or 3, wherein determining the accuracy of the automatic parking comprises:
determining a relative relationship between the first distance and the second distance; and
determining the accuracy based on the relative relationship.

5. The method of claim 1, wherein determining the distance between the vehicle and the at least one reference object comprises:
in response to determining that a first reference object in the at least one reference object is an obstacle, measuring the distance between the vehicle and the first reference object by using a distance sensor arranged on the vehicle; and
in response to determining that the first reference object is a marking line, acquiring an image comprising at least a part of the vehicle and at least a part of the first reference object by using an image acquisition device arranged on the vehicle, and determining the distance between the vehicle and the first reference object from the image.

6. The method of claim 1, further comprising:
providing information related to the accuracy of the automatic parking, in which the information comprises at least one of the accuracy, the distance and a duration of the automatic parking.

7. The method of claim 6, wherein providing information related to the accuracy of the automatic parking comprises:
providing the information by using at least one of color, shape, pattern and sound corresponding to the accuracy; or
determining a graphical representation of the vehicle, and representing the information in association with the graphical representation.

8. An apparatus for determining an automatic parking effect, comprising:
an environment information determining module, configured to determine surrounding environment information of a vehicle in response to completion of automatic parking of the vehicle, in which the surrounding environment information at least indicates a set of surrounding objects of the vehicle and a position relationship between the vehicle and an object in the set of surrounding objects;
a reference object selecting module, configured to select at least one reference object from the set of surrounding objects based on the surrounding environment information;
a distance determining module, configured to determine a distance between the vehicle and the at least one reference object; and
an accuracy determining module, configured to determine an accuracy of the automatic parking based on the distance.

9. The apparatus of claim 8, wherein the distance determining module comprises:
a first side determining unit, configured to determine a first side of the vehicle associated with a first reference object in the at least one reference object;
a location selecting unit, configured to select a first location and a second location from a first predetermined location set on the vehicle associated with the first side, the first location being different from the second location; and
a distance determining unit, configured to determine a first distance from the first location to the first reference object and a second distance from the second location to the first reference object.

10. The apparatus of claim 8, wherein the distance determining module comprises:
a first side determining unit, configured to determine a first side of the vehicle associated with a first reference object in the at least one reference object;
a second side determining unit, configured to determine a second side of the vehicle opposite to the first side;
a second reference object selecting unit, configured to select a second reference object associated with the second side from the at least one reference object;
a first location determining unit, configured to select a first location from a first predetermined location set on the vehicle associated with the first side;
a second location determining unit, configured to select a second location from a second predetermined location set on the vehicle associated with the second side; and
a distance determining unit, configured to determine a first distance from the first location to the first reference object and a second distance from the second location to the second reference object.

11. The apparatus of claim 9 or 10, wherein the accuracy determining module comprises:
a relative relationship determining unit, configured to determine a relative relationship between the first distance and the second distance; and
an accuracy determining unit, configured to determine the accuracy based on the relative relationship.

12. The apparatus of claim 8, wherein the distance determining module comprises:
a first determining unit, in response to determining that a first reference object in the at least one reference object is an obstacle, measure the distance between the vehicle and the first reference object by using a distance sensor arranged on the vehicle; and
a second determining unit, configured to, in response to determining that the first reference object is a marking line, acquire an image comprising at least a part of the vehicle and at least a part of the first reference object by using an image acquisition device arranged on the vehicle, and determine the distance between the vehicle and the first reference object from the image.

13. The apparatus of claim 8, further comprising:
an information providing module, configured to provide information related to the accuracy of the automatic parking, in which the information comprises at least one of the accuracy, the distance and a duration of the automatic parking.

14. The apparatus of claim 14, wherein the information providing module is configured to:
provide the information by using at least one of color, shape, pattern and sound corresponding to the accuracy; or
determine a graphical representation of the vehicle, and represent the information in association with the graphical representation.

15. A computing device, comprising:
one or more processors; and
a storage device, configured to store one or more programs, wherein when the one or more programs are executed by the one or more processors, the one or more processors are caused to implement the method of any of claims 1-7.
